(19) **Europäisches Patentamt**
**European Patent Office**
**Office européen des brevets**

(11) **EP 4 670 987 A1**

(12) **EUROPEAN PATENT APPLICATION**

(43) Date of publication:
**31.12.2025 Bulletin 2026/01**

(21) Application number: **25184441.1**

(22) Date of filing: **23.06.2025**

(51) International Patent Classification (IPC):
**B41J 2/21** (2006.01)      **B41J 3/407** (2006.01)
**B41J 11/00** (2006.01)      **C09D 11/328** (2014.01)
**D06B 11/00** (2006.01)      **D06P 5/30** (2006.01)

(52) Cooperative Patent Classification (CPC):
**D06B 11/0059; B41J 2/2114; B41J 3/4078;**
**B41J 11/0015; C09D 11/328; C09D 11/38;**
**C09D 11/40; C09D 11/54; D06P 5/30**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.06.2024 JP 2024100955**

(71) Applicant: **KONICA MINOLTA, INC.**
**Tokyo 100-7015 (JP)**

(72) Inventors:
- **KUROGI, Yusuke**
  **Tokyo, 100-7015 (JP)**
- **SASAKI, Keita**
  **Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INKJET TEXTILE PRINTING APPARATUS, INKJET TEXTILE PRINTING METHOD, AND PROGRAM**

(57)     Disclosed is an inkjet textile printing apparatus (P) including: heads that eject a penetrant liquid and a color ink onto a textile; and an ejection controller (6) that controls ejection of the penetrant liquid by the head. When an adhesion amount of the color ink is represented by A [g/m$^2$] and an adhesion amount of the penetrant liquid is represented by B [g/m$^2$], the ejection controller controls ejection of the penetrant liquid by the head to satisfy the following Expression (1) when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2, B1 < B2 (1).

# FIG. 3

PENETRANT LIQUID ADHESION AMOUNT B

COLOR INK ADHESION AMOUNT A

EP 4 670 987 A1

**Description**

BACKGROUND OF THE INVENTION

TECHNICAL FIELD

The present invention relates to an inkjet textile printing apparatus, an inkjet textile printing method, and a program.

DESCRIPTION OF RELATED ART

As a method of printing an image such as letters, pictures, and patterns on a textile such as a woven textile or a nonwoven textile, an inkjet textile printing method in which an ink is ejected from an inkjet head to land on the textile has been widely spread in recent years.

In textile printing, it is required that a surface of a textile on which an ink has landed and a back surface opposite to the surface have a similar color tone, that is, a printed ink penetrates to the back surface. When the printed ink permeates to the back surface, the aesthetic appearance of the printed textile is further enhanced.

Therefore, for example, Japanese Unexamined Patent Publication No. 2022-014927 and Pat. No. 7206699 describe a configuration in which a penetrant liquid is applied to textile so that printed ink permeates to the back surface.

SUMMARY OF THE INVENTION

However, when the penetrant liquid is used, the front surface concentration is likely to be lowered by an amount by which the ink comes out to the back surface. The problem is solved by increasing the adhesion amount of the ink, but in this case, the ink tends to bleed. Furthermore, since the amount of ink consumption increases, printing costs increase.

The present invention has been made in view of such circumstances. It is an object of the present invention to provide an inkjet textile printing apparatus, an inkjet textile printing method, and a program that can suppress ink bleeding and a reduction in surface density even when a penetrant liquid is used.

To achieve at least one of the abovementioned objects, according to an aspect of the present invention, inkjet textile printing apparatus reflecting one aspect of the present invention comprises:
a plurality of heads that eject a penetrant liquid and a color ink onto a textile; and

an ejection controller (6) that controls ejection of the penetrant liquid by the head, wherein
when an adhesion amount of the color ink is represented by A [g/m$^2$] and an adhesion amount of the penetrant liquid is represented by B [g/m$^2$],
the ejection controller controls ejection of the penetrant liquid by the head to satisfy the following Expression (1) when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2.

$$B1 < B2 \text{---}(1).$$

Preferably, the ejection controller controls the ejection of the penetrant liquid by the head so as to satisfy $0.6 \leq \beta/\alpha \leq 1.0$, where $\alpha$ is a color difference between a front surface density of a color ink ejection area and the textile, and $\beta$ is a color difference between a back surface density of the color ink ejection area and the textile.

Preferably, the ejection controller sets the adhesion amount B of the penetrant liquid on the basis of the following Expression (2) when a set value is set as C [g/m$^2$], a maximum adhesion amount of the penetrant liquid is set as D [g/m$^2$], and an arbitrary positive integer is set as $\gamma$.

$$B = \min (D, \max (C\text{-}\gamma A, 0))\text{---}(2)$$

Preferably, when a set value is set as C [g/m$^2$], a maximum adhesion amount of the penetrant liquid is set as D [g/m$^2$], an arbitrary positive integer is set as y, and a minimum adhesion amount of the penetrant liquid is set as E [g/m$^2$], the ejection controller sets the adhesion amount B of the penetrant liquid based on the following Expression (3).

$$B = \min (D, \max (C\text{-}\gamma A, E))\text{---}(3)$$

Preferably, the ejection controller controls the head so as not to eject the penetrant liquid to a color ink non-ejection area.

Preferably, the plurality of heads eject the color ink in a plurality of colors.

Preferably, the ejection controller sets the maximum adhesion amount of the penetrant liquid in accordance with print resolution.

Preferably, inkjet textile printing apparatus includes:

an image forming controller (6) that controls ejection of the color ink by the head to form a predetermined test image on the textile;

a reading section (6) that reads the test image formed on the textile; and

a setting section (6) that sets the print resolution and the set value based on a reading result of the test image by the reading section.

Preferably, the penetrant liquid contains a surfactant, and a total content of the surfactant in the penetrant liquid is 2.0% or more.

Preferably, the total content of the surfactant in the penetrant liquid is less than 5.0%.

Preferably, the surfactant is an acetylene glycol-based surfactant.

Preferably, the color ink contains a dye.

To achieve at least one of the abovementioned objects, according to another aspect of the present invention, inkjet textile printing method reflecting one aspect of the present invention is an inkjet textile printing method performed by an inkjet textile printing apparatus including a plurality of heads that eject a penetrant liquid and a color ink onto a textile, the method comprising

a control step that is, when an adhesion amount of the color ink is represented by A [$g/m^2$] and an adhesion amount of the penetrant liquid is represented by B [$g/m^2$],

controlling the head to eject the penetrant liquid such that the following Expression (1) is satisfied when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2.

$$B1 < B2 \text{---}(1).$$

To achieve at least one of the abovementioned objects, according to another aspect of the present invention, a program reflecting one aspect of the present invention is a program for a computer of an inkjet textile printing apparatus including a plurality of heads that eject a penetrant liquid and a color ink onto a textile, the program causing the computer to function as

an ejection controller that, when an adhesion amount of the color ink is represented by A [$g/m^2$] and an adhesion amount of the penetrant liquid is represented by B [$g/m^2$],

controls the head to eject the penetrant liquid so as to satisfy the following Expression (1) when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2.

$$B1 < B2 \text{---}(1).$$

BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:

FIG. 1 is a schematic diagram illustrating an example of a configuration of an inkjet recording apparatus applicable to the inkjet textile printing method;

Fig. 2 is a process flow diagram illustrating an example of the step in the inkjet textile printing method;

FIG. 3 is a graph showing an example of the relationship between the adhesion amount of the color ink and the adhesion amount of the penetrant liquid;

FIG. 4 is a graph showing an example of the relationship between the adhesion amount of the color ink and the adhesion amount of the penetrant liquid

FIG. 5 is a graph showing an example of the relationship between the adhesion amount of the color ink and the adhesion amount of the penetrant liquid;

FIG. 6 is a graph showing an example of the relationship between the adhesion amount of the color ink and the adhesion amount of the penetrant liquid

FIG. 7 is a graph showing an example of the relationship between the adhesion amount of the color ink and the adhesion amount of the penetrant liquid;

FIG. 8 is a graph illustrating an example of the relationship between the adhesion amount of the color ink and the adhesion amount of the penetrant liquid;

FIG. 9 is a graph illustrating an example of a relationship between the adhesion amount of the color ink and the adhesion amount of the penetrant liquid; and

FIG. 10 is a graph illustrating an example of a relationship between the adhesion amount of the color ink and the adhesion amount of the penetrant liquid.

DETAILED DESCRIPTION

Hereinafter, an inkjet textile printing apparatus according to an embodiment of the present invention will be described in detail with reference to the drawings. However, the scope of the invention is not limited to the disclosed embodiments.

In the following description, components having the same function and configurations are denoted by the same reference numerals, and the description thereof will be omitted.

In the present description, when two figures are used to indicate a range of value before and after "to", these figures are included in the range as a lower limit value and an upper limit value.

[Ink Set for Inkjet Textile Printing]

First, an ink set for inkjet textile printing (hereinafter, also referred to simply as "ink set") to be ejected by the inkjet textile printing apparatus of the present invention will be described. The ink set is composed of a penetrant liquid for inkjet textile printing (hereinafter, also referred to simply as a "penetrant liquid") and color ink for inkjet textile printing (hereinafter, also referred to simply as "color ink"). The penetrant liquid contains at least a surfactant A, an organic solvent, and water, and the total content of the surfactant A is 2.0 mass% or more. Further, the color ink contains at least a dye. Furthermore, the total content of the surfactant A contained in the penetrant liquid is 30 times or more and less than 80 times the total content of the surfactant B contained in the color ink.

(penetrant liquid)

A penetrant liquid according to the present invention contains surfactant A, an organic solvent, and water. Hereinafter, the surfactant, the organic solvent, and other constituent materials of the penetrant liquid will be described in detail.

[surfactant A]

In the present invention, the total content of the surfactant A contained in the penetrant liquid is 2 mass% or more. Note that the "total content of the surfactant A" is a value representing the total mass containing the surfactant A % by mass when the total mass of the penetrant liquid is 100 % by mass.

The total content of the surfactant is preferably within a range of not less than 2 mass% and less than 10 mass%. The total content of the surfactant A is more preferably within a range of 2 mass% or more and less than 5 mass%.

The surfactant A according to the present invention may be composed of one type or two or more types of surfactant. In a case where the surfactant A is composed of two or more kinds, the total mass of the two or more kinds of surfactants is defined as the total content of the surfactant A contained in the penetrant liquid.

The surfactant A contained in the penetrant liquid is not particularly limited, but for example, an acetylene glycol-based surfactant, a fluorine-based surfactant, a silicone-based surfactant, or the like is used. Of these, an acetylene glycol-based surfactant is preferably used from the viewpoint of the permeability into textile.

{acetylene glycol-based surfactant}

The acetylene glycol-based surfactants are not particularly limited, but for example, one or more selected from alkyleneoxide adducts such as 2, 4,7,9-tetramethyl-5-decyne-4,7-diol and 2, 4,7,9-tetramethyl-5-decyne-4,7-diol, and alkyleneoxide adducts such as 2,4-dimethyl-5-decyne-4-ol and 2,4-dimethyl-5-decyne-4-ol are preferable.

The acetylene glycol-based surfactant can also be obtained as a commercially available product. Examples thereof include Olfine 104 series, E series such as Olfine E1004, E1006, E1010, E1020, and E1030, Olfine PD 002 W, Surfynol 465, and Surfynol 61 (all manufactured by Nissin Chemical Industries, Ltd). The acetylene glycol-based surfactant may be used alone or in combination of two or more kinds thereof.

{Fluorine -based surfactant}

In addition, as the fluorine-based surfactant, for example, a perfluoroalkyl sulfonate, a perfluoroalkyl carboxylate, a perfluoroalkyl phosphate ester, a perfluoroalkyl ethylene oxide adduct, a perfluoroalkyl betaine, a perfluoroalkyl amine oxide compound, or the like is used. In addition, as the silicone-based surfactant, a polysiloxane-based compound, a polyether-modified organosiloxane, or the like is used.

In the ink set of the present invention, the total content of the surfactant A contained in the penetrant liquid for inkjet textile printing is preferably 30 times or more and less than 80 times, particularly preferably 40 times or more and less than 60 times the total content of the surfactant B (described later) contained in the color ink for inkjet textile printing.

The magnification of the total content of each surfactant in the present invention is expressed as a magnification (concentration of surfactant A (% by mass)/concentration of surfactant B (% by mass)) expressed in terms of the concentration (% by mass) of each of surfactant A and surfactant B when the total mass of the penetrant liquid or the color ink is defined as 100 % by mass.

In the present invention, the penetrability of the color ink into textile is improved by setting the ratio of the concentration (% by mass) of the surfactant A to the concentration (% by mass) of the surfactant B within the range defined above. As a result, a printed fabric excellent in color development stability such as color development inhibition resistance and color development unevenness resistance is obtained.

[organic solvent]

The penetrant liquid according to the present invention contains an organic solvent together with surfactant A. It is preferable that the total content of the organic solvent contained in the penetrant liquid according to the present invention is 40% by mass or more when the total mass of the penetrant liquid is 100% by mass.

The organic solvent applicable to the present invention is not particularly limited. For example, as the organic solvent, a glycol ether-based solvent, a nitrogen-containing solvent, an aprotic polar solvent, an alkyl polyolbased solvent, a monoalcohols-based solvent and the like are used. The organic solvent may be used alone or in combination of two or more kinds thereof.

{alkyl polyol}

In the present invention, the at least one organic solvent is preferably an alkyl polyol. The alkylpolyol that can be applied to the present invention includes although not particularly limited, for example, 1,2-pentanediol (104°C), propylene glycol (188°C), 1,2-butanediol (193°C), ethylene glycol (197°C), 1,3-butanediol (207°C), 1,3-propanediol (214°C), 1,2-hexanediol (223°C), 1,4-Butanediol (230°C), 2-Methyl-2-propyl-1, 3-propanediol (230°C), 1,5-pentanediol (242°C), 2-Ethyl-1, 3-hexanediol (244°C), 3-Methyl-1, 5-pentanediol (249°C), and 1,6-hexanediol (250°C) (the numerical value in parentheses represents a normal boiling point),). Among these, alkyl polyol having a boiling point of 200 °C or lower are preferable. For example, propylene glycol (188°C), 1,2-butanediol (193°C), ethylene glycol (197°C), or the like is used.

When such an alkyl polyol is used, clogging reliability tends to be further improved when the penetrant liquid is attached by an inkjet method. These alkyl polyols may be used alone or in combination of two or more thereof. The content of the alkyl polyol is preferably 10 to 70% by mass, and more preferably 20 to 60% by mass, relative to 100% by mass of the inkjet textile printing penetrant liquid.

{glycol ether}

In the present invention, in addition to the alkyl polyol, a glycol ether is applicable as the organic solvent. Glycol ether refers to although not particularly limited, for example, dipropylene glycol dimethyl ether (171°C), diethylene glycol ethyl methyl ether (176°C), diethylene glycol isopropyl methyl ether (179°C), dipropylene glycol monomethyl ether (188°C), diethylene glycol diethyl ether (189°C), diethylene glycol monomethyl ether (194°C), diethylene glycol butyl methyl ether (212°C), tripropylene glycol dimethyl ether (215°C), triethylene glycol dimethyl ether (216°C), diethylene glycol monobutyl ether (230°C), dipropylene glycol (230°C), diethylene glycol (245°C), ethylene glycol monophenyl ether (245°C), triethylene glycol monomethyl ether (249°C), diethylene glycol dibutyl ether (256°C) is mentioned (the numerical value in parentheses is a standard boiling point),). Among these, diethylene glycol monobutyl ether (boiling point: 230°C) and triethylene glycol monomethyl ether (boiling point: 230°C) are more preferable.

[water]

The water is not particularly limited, and pure water or ultrapure water such as ion-exchanged water, ultrafiltered water, reverse osmosis water, or distilled water can be used. The content of water is not particularly limited and may be appropriately determined as necessary, and water may be included as the remainder of the other components included in the penetrant liquid. For example, the content of the water may be included in the range of 30 to 80% by mass with respect to the total amount (100% by mass) of the penetrant liquid for inkjet textile printing.

[other additives]

In addition to the above-described additives, a pH adjuster, a chelating agent, a humectant, an antireducing agent, a preservative, a fungicide, and the like can be added to the penetrant liquid according to the present invention.
As the preservative and the fungicide, for example, aromatic halogen compounds (e.g., Preventol CMK, manufactured by Bayer AG), methylene dithiocyanate, a halogen-containing nitrogen-sulfur compound, 1,2-benzisothiazolin-3-one (e.g., PROXEL GXL, manufactured by Lonza Japan Ltd), and the like can be added.
As the pH adjuster, for example, urea, sodium hydroxide, or the like can be added.

[liquid physical properties of penetrant liquid]

It is preferable that the penetrant liquid have a viscosity of 2 to 10 mPa · s at 25°C. It is more preferable that the penetrant liquid have a viscosity of 4~8 mPa · s at 25°C. It is more preferable that the viscosity of the penetrant liquid at 25°C is approximately around 7 mPa · s. The viscosity of the ink composition can be determined by measurement in accordance with JIS Z8809 using a vibrating viscometer. In addition, the surface tensions of the penetrant liquids are preferably within a range of 20 to 40 mN/m.

[Method for Preparing penetrant liquid]

The penetrant liquid according to the present invention can be prepared by mixing the above-described components in an arbitrary order, and removing impurities by filtration or the like as necessary. As a method of mixing the constituent materials, a method is suitably used in which the materials are successively added to a container equipped with a stirring device, such as a mechanical stirrer or a magnetic stirrer, and then stirred and mixed. As a filtration method, for example, centrifugal filtration or filter filtration can be performed as necessary.
It is also preferable that the penetrant liquid according to the present invention is subjected to a deaeration treatment. In a case where the penetrant liquid is applied to the textile by the inkjet method, if dissolved gas is included in the penetrant liquid, fine air bubbles are generated in the penetrant liquid when the penetrant liquid is ejected from the inkjet head, which causes ejection failure. Therefore, it is preferable to remove the dissolved gas from the penetrant liquid. The deaeration method is roughly classified into a physical method such as boiling or pressure reduction, and a chemical method in which an absorbent is added and mixed in the pretreatment ink, and can be appropriately selected and applied.

(color ink)

The color ink according to the present invention contains a dye as a color material. Furthermore, the color ink more preferably contains the surfactant B. The color ink may further contain an organic solvent, ureas, sugars, a pH adjuster, a chelating agent, a preservative, a rust inhibitor, and other components.

[color material]

In the present invention, the content of the coloring material contained in the color ink is preferably from 1 to 25% by mass, more preferably from 2 to 20% by mass, based on the total mass of the color ink. The dye applicable to the color ink according to the present invention is not particularly limited, and a disperse dye, a reactive dye, an acid dye, a direct dye, and the like are used. As the hues of the respective color inks constituting the color ink, yellow, magenta, cyan, black, blue, green, and red are preferably used. It is particularly preferable that yellow, magenta, cyan, and black dyes be used as the color ink.
Specific compounds of dyes as color materials preferably used in the present invention are shown below, but the present invention is not limited to these exemplified compounds.

{disperse dye}

The disperse dye preferably used in the color ink according to the present invention preferably has a structure represented by

CI.Disperse Yellow: 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232.
CI.Disperse Orange: 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142.
CI.Disperse Red: 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328,
CI.Disperse Violet:1, 4, 8, 23, 26, 27, 28, 31, 33, 35, 36, 38, 40, 43, 46, 48, 50, 51, 52, 56, 57, 59, 61, 63, 69, 77.
CI.Disperse Green:9,
CI.Disperse Brown:1, 2, 4, 9, 13, 19
CI.Disperse Blue:3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 167:1, 171, 173, 174, 176, 181, 183, 185, 186, 187, 189, 6 v, 2 v, 3 v, 4 v, 6 v, 6 v, 7 v, 7 v, 7 v,7v,7v,7v,7v,7v,7v,7v,7v,7v,7v,7v,7v,7v,7v,7v,7v,7v,7v,7v,7v,7v,7v,7v,7v,7v, 7 v, 7 v, 7 v, 7 197 198 200 201 205 207 211 214 224 225 257 259 267 268 270 284 285 287 288 291 293 295 297 301 315 330 333
CI.Disperse Black:1, 3, 10, 24
And the like.

In an inkjet textile printing method using a disperse dye, it is preferable to select a disperse dye having good sublimation fastness when color is developed by high-temperature treatment. This is because when the dye sublimates on a white field of a machine or a fabric, it may cause contamination.

{reactive dye}

Examples of the reactive dye preferably used in the color ink according to the present invention include

CI.Reactive Yellow:2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176.
CI.Reactive Orange:1, 4, 5, 7, 11, 12, 13, 15, 16, 20, 30, 35, 56, 64, 67, 69, 70, 72, 74, 82, 84, 86, 87, 91, 92, 93, 95, 107.
CI.Reactive Red:2, 3, 3:1, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 226, 228, 235.
CI.Reactive Violet: 1, 2, 4, 5, 6, 22, 23, 33, 36, 38
CI.Reactive Blue:2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236.
CI.Reactive Green:8, 12, 15, 19, 21
CI.Reactive Brown:2, 7, 9, 10, 11, 17, 18, 19, 21, 23, 31, 37, 43, 46
CI.Reactive Black:5, 8, 13, 14, 31, 34, 39
And the like.

{acid dye}

Acidic dyes that are preferably used in the color ink according to the present invention include

CI.Acid Yellow:1, 3, 11, 17, 18, 19, 23, 25, 36, 38, 40, 40:1, 42, 44, 49, 59, 59:1, 61, 65, 67, 72, 73, 79, 99, 104, 110, 159, 169, 176, 184, 193, 200, 204, 207, 215, 219, 219:1, 220, 230, 232, 235, 241, 242, 246.
CI.Acid Orange:3, 7, 8, 10, 19, 22, 24, 51, 51S, 56, 67, 74, 80, 86, 87, 88, 89, 94, 95, 107, 108, 116, 122, 127, 140, 142, 144, 149, 152, 156, 162, 166, 168.
CI.Acid Red:1, 6, 8, 9, 13, 18, 27, 35, 37, 52, 54, 57, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
CI.Acid Violet:17, 19, 21, 42, 43, 47, 48, 49, 54, 66, 78, 90, 97, 102, 109, and 126.
CI.Acid Blue:1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 258, 260, 264, 277:1, $n = 1$, $n = 0$, $n = 1$, $n = 0$, $n = 1$, $n = 0$, $n = 1$, $n = 0$, $n = 1$, $n = 0$, $n = 1$, $n = 0$, $n = 1$, $n = 0$, $n = 0$, $n = 1$, $n = 0$, $n = 0$, $n = 0$, $n = 0$, $n = 0$, $n = 278$ 279 280 284 290 296 298 300 317 324 333 335 338 342 350
CI.Acid Green:9, 12, 16, 19, 20, 25, 27, 28, 40, 43, 56, 73, 81, 84, 104, 108, 109.
CI.Acid Brown:2, 4, 13, 14, 19, 28, 44, 123, 224, 226, 227, 248, 282, 283, 289, 294, 297, 298, 301, 355, 357, 413.
CI.Acid Black:1, 2, 3, 24, 24:1, 26, 31, 50, 52, 52:1, 58, 60, 63, 63S, 107, 109, 112, 119, 132, 140, 155, 172, 187, 188, 194, 207, 222.
And the like.

{direct dye}

Direct dyes preferably used in the color ink according to the present invention include

CI.Direct Yellow:8, 9, 10, 11, 12, 22, 27, 28, 39, 44, 50, 58, 86, 87, 98, 105, 106, 130, 137, 142, 147, and 153.
CI.Direct Orange:6, 26, 27, 34, 39, 40, 46, 102, 105, 107, 118
CI.Direct Red:2, 4, 9, 23, 24, 31, 54, 62, 69, 79, 80, 81, 83, 84, 89, 95, 212, 224, 225, 226, 227, 239, 242, 243, 254.
CI.Direct Violet:9, 35, 51, 66, 94, 95
CI.Direct Blue:1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291.
CI.Direct Green:26, 28, 59, 80, 85,
CI.Direct Brown:44, 44:1, 106, 115, 195, 209, 210, 212:1, 222, 223
CI.Direct Black:17, 19, 22, 32, 51, 62, 108, 112, 113, 117, 118, 132, 146, 154, 159, 169.
And the like.

[surfactant B]

The surfactant B applicable to the color ink according to the present invention is not particularly limited. For example, as the surfactant B, similar to the surfactant A used in the above-described penetrant liquid, an acetylene glycol-based surfactant, a fluorine-based surfactant, a silicone-based surfactant, or the like is used.
In a case of using the surfactant B in the color ink, one type can be used alone, or two or more types can be used in combination. The surfactant is preferably added in a range of 0.001 to 1% by mass with respect to the total mass of the color ink. When the surfactant B is added in the above range, the surface tension of the color ink can be arbitrarily adjusted.

[organic solvent]

As the water-soluble organic solvent used in the color ink according to the present invention, the same organic solvents as those used in the penetrant liquid described above can be used. The content of the water-soluble organic solvent is preferably in the range of 10 to 60% by mass with respect to the total mass of the color ink.

[other various additives]

Similarly to the penetrant liquid described above, various additives may be added to the color ink according to the present invention. For example, inorganic salts, pH adjusters, chelating agents, humectants, reduction inhibitors, preservative, and fungicide can be added to the color ink as additives. Furthermore, if necessary, for example, an additive which can be generally used in the ink for inkjet, such as a rust inhibitor such as benzotriazole, an antioxidant, an ultraviolet absorber, an oxygen absorber, or a dissolution aid, may be added to the color ink.

{inorganic salt}

The inorganic salt is not particularly limited, and for example, sodium chloride, sodium sulfate, magnesium chloride, magnesium sulfate, or the like can be added.

{preservative, fungicide, pH adjuster}

As the preservative and the fungicide, for example, an aromatic halogen compounds (e.g., Preventol CMK, manufactured by Bayer AG), methylene dithiocyanate, a halogen-containing nitrogen-sulfur compound, 1,2-benzisothiazolin-3-one (e.g., PROXEL GXL, manufactured by Lonza Japan Ltd), and the like can be added to the color ink. As the pH adjuster, for example, urea or sodium hydroxide can be added to the color ink.

[Liquid Physical Properties of Color Ink]

{pH}

The color ink according to the present invention preferably has a pH of 7.0 or more and 11.0 or less. The color ink more preferably has a pH of 7.0 or more and 8.0 or less. If the pH of the color ink is within the above range, the storage stability of the dye in the ink is improved and the color developability and the hue of the obtained image are less likely to change.

{surface tension}

In the present invention, the color ink for inkjet textile printing preferably has a surface tension at 20°C in the range of 20 to 40 mN/m from the viewpoint of the balance between printing qualities and reliability as an inkjet ink. Furthermore, the surface tensions of the color inks for inkjet textile printing at 20°C are more preferably in a range of 30 to 36 mN/m. When the surface tension of the color ink is within the above range, excellent ejection stability is achieved in inkjet textile printing. In addition, the color ink is likely to uniformly wet-spread and permeate into textile at the time of adhesion to the textile. Thus, the color ink is more likely to be fixing to the textile.

Note that the surface tension can be measured by, for example, confirming the static surface tension when a platinum plate is wetted with ink under an environment of 20°C using an automatic surface tensiometer CBVP-Z (trade name, manufactured by Kyowa Interface Science Co., Ltd).

{viscosity }

The viscosity of the color ink at 20°C is preferably in a range of 1.5 to 10 mPa · s. The viscosity of the color ink at 20°C is more preferably in a range of 2 to 8 mPa · s. The viscosity of the color ink at 20°C is more preferably within a range of 4 to 5. 5 mPa · s. When the viscosity of the ink at 20°C is within the above range, the ink is more likely to be fixed when adhered to textile, and the color developability is improved.

In the present invention, the viscosity of the color ink can be measured using, for example, a cone-plate viscometer. As the cone-plate type viscosity meter, for example, a TVE-33LT viscosity meter manufactured by Toki Sangyo Co., Ltd. is used.

[Method for Preparing Color Ink]

The color ink is obtained by mixing the above-described components in any order and removing impurities by filtration or the like, if necessary. As the mixing method, a method of sequentially adding the respective components to a container provided with a stirring device such as a mechanical stirrer or a magnetic stirrer and stirring and mixing the components is suitably used. As a filtration method, centrifugal filtration, filter filtration, or the like can be performed as necessary.

[inkjet textile printing method]

The inkjet textile printing method of the present invention (hereinafter, also referred to simply as "textile printing method") uses a penetrant liquid and color ink. The penetrant liquid contains at least a surfactant A, an organic solvent, and water, and the total content of the surfactant A is 2.0 mass% or more. Further, the color ink contains at least a dye. After the penetrant liquid is attached to the textile, the color ink is attached to form a printed image.

The textile printing method of the present invention is performed by inkjet recording in which ink droplets are ejected from an inkjet head. The inkjet head may be of an on-demand type or a continuous type. In addition, the ejection method of the inkjet head may be any ejection method. Examples of the ejection method of the inkjet include an electromechanical conversion method (for example, a single cavity type, a double cavity type, a bender type, a piston type, a share mode type, and a shared wall type) and an electrothermal conversion method (for example, a thermal inkjet type and a bubble jet (R) type).

The printing method of the inkjet head is not particularly limited, and may be any of a single-pass type and a scanning type. However, from the viewpoint of being effective for high-speed printing, the single-pass type is preferable as the printing method. The single-pass inkjet recording method is a printing method in which when a textile passes once under one inkjet head unit, all dots for forming pixels are ejected. As a means for achieving a single-pass printing system, a line head type inkjet head is preferably used.

[Inkjet Textile Printing Apparatus]

First, an example of an inkjet textile printing apparatus which can be applied to the inkjet textile printing method of the present invention will be described with reference to the drawings.

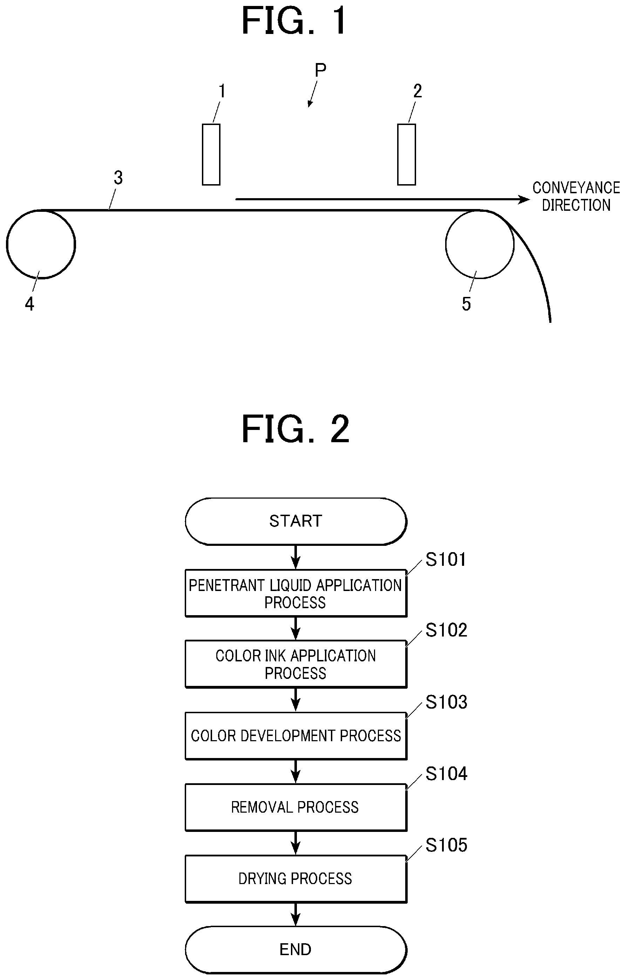

FIG. 1 is a schematic diagram showing a configuration of an inkjet textile printing apparatus P which can be applied to an inkjet textile printing method used in examples which will be described later, and a part of a step of printing on a textile using a penetrant liquid and a color ink.

The inkjet textile printing apparatus P includes a first head carriage 1 and a second head carriage 2. An inkjet head (hereinafter, also referred to simply as a head) filled with a penetrant liquid is mounted on the first head carriage 1. A plurality of heads filled with color ink of respective colors is mounted on the second head carriage 2. The textile 3 is conveyed in a conveyance direction illustrated in the figure by the conveyance roller 4 and the conveyance roller 5. Under the control of the controller 6, the inkjet textile printing apparatus P causes the penetrant liquid to adhere to the textile 3 and then causes the color ink to adhere to the textile 3 to form a printed image.

(textile)

The material constituting the textile 3 is not particularly limited as long as it contains a fiber dyeable with a coloring agent. Provided that the material constituting the textile 3 is preferably at least one kind selected from cotton, silk, hemp, wool, a nylon fiber, a rayon fiber, an acetate fiber, a polyester fiber, and a blended yarn thereof. The textile 3 may be any form of the above-mentioned fibers, such as a woven fabric, a knitted fabric, or a nonwoven fabric. The textile 3 preferably contains 100% of fibers dyeable with a coloring agent, but a mixed woven fabric, a mixed nonwoven fabric, or the like can also be used as the textile 3. The thickness of the yarn constituting the textile 3 is preferably in the range of 10 to 100d.

The combination of the textile 3 and the dye is not particularly limited. Examples of the combination of the textile 3 and the dyes include fibers containing a reactive dye and cellulose as main component (cotton; hemp; rayon and the like); acid dye and silk; wool; nylon fiber; basic dye and acrylic fiber; direct dye and cotton; hemp; rayon, disperse dyes, and polyester fiber. Of these, combinations of a reactive dye and a fiber containing cellulose as a main component and combinations of an acid dye and silk, wool, or nylon fiber are preferable. Such a combination tends to further reduce the difference in color developability between the front and back surfaces of the printed fabric.

(head)

As described above, the inkjet textile printing apparatus P applies each of the penetrant liquid and the color ink onto the textile 3 by the head. By applying the penetrant liquid and the color ink with the heads, respectively, it is possible to uniformly and evenly apply necessary amounts of the penetrant liquid and the ink to a necessary portion.

As illustrated in FIG. 1, the heads used to apply the penetrant liquid and the color ink to the textile 3 are mounted on separate and independent carriages. In a case where a head that applies the penetrant liquid is mounted on another carriage, a drying device that dries the penetrant liquid applied to the textile 3 may be provided between both carriages. Note that the heads that apply the penetrant liquid and the color ink may be mounted on the same carriage.

(controller)

The controller 6 controls each unit constituting the inkjet textile printing apparatus P. The controller 6 includes a central processing unit (CPU), a random access memory (RAM), and a read only memory (ROM).

The CPU reads and executes various programs, data, and the like corresponding to processing contents from a storage device such as a ROM. In addition, the CPU controls the operation of each unit of the inkjet textile printing apparatus P according to the executed processing content. The RAM temporarily stores various programs to be processed by the CPU, data, and the like. The ROM stores various programs, data, and the like read by the CPU and the like. The ROM is a non-volatile storage device such as a hard disk drive (HDD), a solid state drive (SSD), or a flash memory.

In the above description, an example in which a hard disk, a semiconductor nonvolatile memory, or the like is used as a computer-readable medium of the program according to the present invention has been disclosed, but the present invention is not limited to this example. As another computer-readable medium, a portable recording medium such as a CD-ROM can be applied. Furthermore, a carrier wave is also applied as a medium for providing data of the program according to the present invention via a communication line.

(inkjet printing step)

Next, the inkjet textile printing method of the present invention will be described based on the flowchart shown in FIG. 2.

First, a penetrant liquid application process is performed in which a penetrant is applied to the textile 3 that is the printed fabric (step S101).

In a case of applying the penetrant liquid to the textile 3, the penetrant liquid may be applied to the surface, the back surface, or both the surface and the back surface of the textile 3 by an inkjet method. In addition, the penetrant liquid may be applied to the entire surface of the textile 3, or may be applied by selecting a printing area to which the color ink is applied.

The controller 6 functions as an ejection controller that controls an adhesion amount (coating amount) of the penetrant liquid by the head. Specifically, the heads are controlled such that the adhesion amount of penetrant liquid applied to the textile 3 is substantially inversely proportional to the amount of color ink applied to the color ink ejection area in the subsequent color ink application process. More specifically, for example, it is assumed that the adhesion amount of the color ink and the adhesion amount of the penetrant liquid in the first color ink ejection area and the second color ink ejection area are (A1, B1) and (A2, B2), respectively, and A1> A2. In this case, the controller 6 controls the head such that the adhesion amount of the penetrant liquid satisfies the following Expression (1).

$$B1 < B2 \text{---}(1).$$

By setting the adhesion amount of the penetrant liquid so as to satisfy Expression (1), it is possible to form an image with excellent penetrability such that when the color difference between the front surface density of the color ink ejection area and the textile 3 is $\alpha$ and the color difference between the back surface density and the textile 3 is $\beta$, $\beta/\alpha$ is 0.6 or more and 1.0 or less.

To be more specific, in a case where the adhesion amount of the color ink is A [g/m$^2$] and the maximum adhesion amount of the penetrant liquid is D [g/m$^2$], the controller 6 sets the adhesion amount B [g/m$^2$] of the penetrant liquid based on Expression (2) below.

$$B = \min (D, \max (C\text{-}\gamma A, 0))\text{---}(2)$$

In Expression (2), C [g/m$^2$] is the sum (set value) of the adhesion amount A of the color ink and the adhesion amount B of the penetrant liquid. The controller 6 applies the maximum adhesion amount of the penetrant liquid to the textile 3 in advance, and then forms test patches (test images) of color inks having different adhesion amounts and acquires the test patches with a colorimeter or the like. Then, the controller 6 reads the front and back densities and the degree of bleeding, and sets the set value C from the sum of the most suitable adhesion amount of color ink applied and the maximum amount of penetrant liquid applied. Thus, in the present embodiment, the controller 6 functions as a reading section that reads an image formed on the textile 3.

Conversely, the controller 6 may apply penetrant liquids having different adhesion amounts to the textile 3, then form test patches of color ink having the maximum adhesion amounts in the respective areas, and set the set value C.

Further, the maximum adhesion amount D of the penetrant liquid increases in proportion to the print resolution. Therefore, at this time, the maximum adhesion amount D of the penetrant liquid can also be set by setting the print resolution at the same time. In the above-described configuration, the controller 6 functions as an image forming controller that forms a test image on the textile 3 and a setting section that sets the set value C and the print resolution on the basis of a reading result of the test image. The print resolution is not limited to a configuration in which the print resolution is set based on the formation of the test image, and a configuration in which a print resolution set in advance is used may be employed.

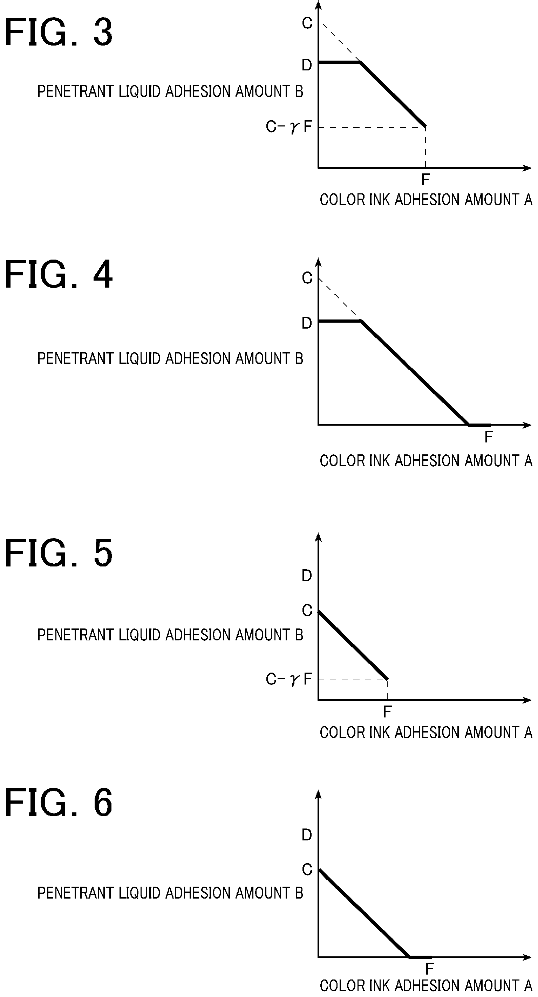

Furthermore, y in the above Expression (2) is a predetermined value and is at least any positive integer. The slopes of the straight lines illustrated in Figs. 3 to 6 can be arbitrarily set by the value of y.

Figs. 3 to 6 are examples of graphs that satisfy Expression (2). Figs. 3 and 5 are graphs illustrating a case where the penetrant liquid is applied in a case where C-$\gamma$ F> 0, that is, in a case where the adhesion amount of the color ink is the maximum value F. In addition, FIGS. 4 and 6 are graphs in a case of C-$\gamma$ FZ$\leqq$0, and are graphs in a case where the penetrant liquid is not applied in a case where the adhesion amount of the color ink is the maximum value F. Further, Fig. 3 and Fig. 4 are graphs in a case of C> D, and Fig. 5 and Fig. 6 are graphs in a case of C$\leqq$D.

In FIGS. 3 to 6, the minimum value of the adhesion amount of the penetrant liquid is set to C-$\gamma$ A or 0, but is not limited thereto, and a predetermined value E [g/m$^2$] may be set. In this case, the adhesion amount B of the penetrant liquid is set based on the following Expression (3).

$$B = \min (D, \max (C\text{-}\gamma A, E))\text{---}(3)$$

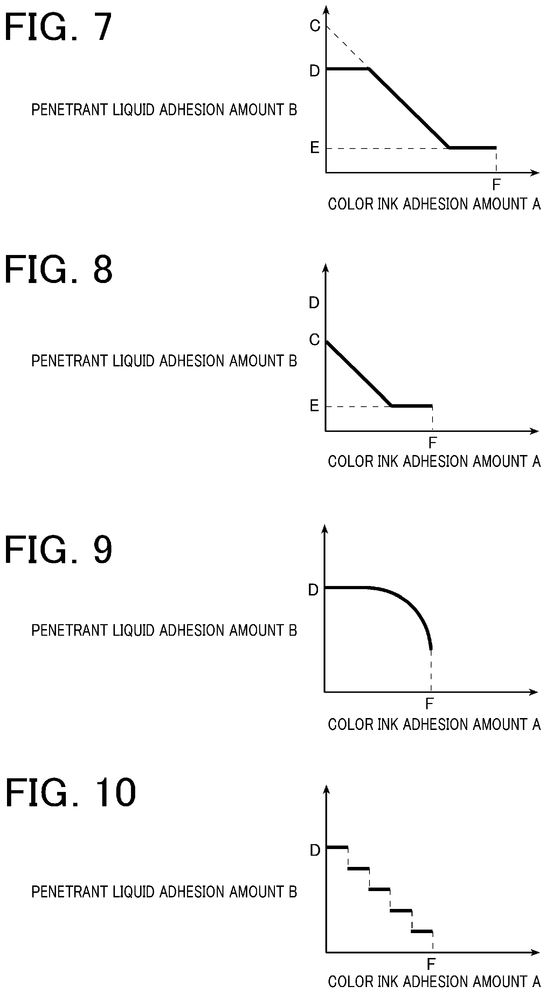

Examples of graphs that satisfy Expression (3) are illustrated in Figs. 7 and 8. Fig. 7 is a graph in a case of C> D, and Fig. 8 is a graph in a case of C≤D.

In FIGS. 3 to 8, a case where the adhesion amount A of the color ink and the adhesion amount B of the penetrant liquid have a relationship of a linear function is exemplified, but the invention is not limited thereto. For example, as shown in FIG. 9, the adhesion amount A of the color ink and the adhesion amount B of the penetrant liquid may have a relationship of a quadratic function according to the setting of γ.

In addition, the relationship between the adhesion amount A of the color ink and the adhesion amount B of the penetrant liquid may not necessarily satisfy A1> A2 and B1 <B2 as long as the above-described effects of the invention of the present application are satisfied. That is, when viewed macroscopically, it is sufficient if there is a tendency such that A1 <A2 when B 1> B2, and substantially, as shown in FIG. 10, there may be a plurality of areas where there is a difference in the adhesion amount A of the color ink, but the adhesion amount B of the penetrant liquid is substantially the same. Alternatively, there may be a area in which the penetrant liquid adhesion amount B of the penetrant liquid in the area with the large color ink adhesion amount A is slightly larger than the adhesion amount B of the penetrant liquid in the area with the small color ink adhesion amount A. However, in a case where the color ink adhesion amounts satisfy A1 <A2, it is preferable that there is no area where B1 <B2.

In addition, in FIGS. 3 to 10, a case where the adhesion amount B of the penetrant liquid is C or D when the adhesion amount A of the color ink is 0 is exemplified, but the invention is not limited thereto. That is, in the non-ejection area of the color ink, the adhesion amount B of the penetrant liquid may be 0, that is, the penetrant liquid may not be ejected.

Next, a color ink application process of forming an image before color development by applying color ink to the textile 3 to which the penetrant liquid is applied in the penetrant liquid application process is performed (Step S102). For example, while the textile 3 is moved relative to the second head carriage 2 on which the plurality of heads are mounted, ink droplets of the respective colors are ejected from the heads. Then, the ink droplets are landed on the entire surface (solid image) or an arbitrary area of the textile 3 to form an image before color development. When an image is formed using ink of a plurality of colors, ink droplets of the respective colors may be ejected separately or simultaneously. Furthermore, bleeding of the image before color development may be suppressed by heating the textile 3 and applying the color ink.

In addition, after the penetrant liquid application process, the color ink may be applied in the color ink application process after drying at least a portion of the penetrant liquid, or the penetrant liquid application process and the color ink application process may be continuously performed online, but the latter is preferable. Note that the term "continuous on-line" as used in the present invention means, as schematically illustrated in Fig. 1, that the penetrant liquid application process and the color ink application process, and furthermore, the subsequent color development process, washing process, and drying process are continuously performed on the same line without cutting the textile 3 in the middle.

After the color ink applying step, a color development step is performed in which high-temperature vapor is applied to the textile 3 on which an image before color development is formed to fix the color material to the fibers of the textile 3 (Step S103). By the color development step, the original hue of the ink is developed. As a method of fixing the color material to the fibers of the textile 3, for example, a steaming method, an HT steaming method, an HP steaming method, a thermofix method, an alkaline pad steam method, an alkaline blotch steam method, an alkaline shock method, an alkaline cold fix method, or the like is used.

In a steaming method using high-temperature steam, a large amount of liquid water exists. Therefore, if the heating temperature is too low, the reactive dye contained in the dark color ink or the light color ink is likely to form a hydrogen bond with liquid water other than the textile 3, and may be washed away together with water and may not be sufficiently dyed. Therefore, in the steaming method, the heating temperature is preferably 95 °C or higher, more preferably 100 °C or higher. For example, the cellulosic fibers are preferably treated at 95 to 105°C for 5 to 15 minutes. Furthermore, the color of the textile 3 to which the ink has been applied may be developed immediately, or may be developed after a predetermined time has elapsed.

After the color development step, a removal step of removing the dyes and the penetrant liquid, which are color materials that cannot be dyed on the textile 3, is performed (step S104). The color material that cannot be dyed to the textile can be removed by a conventionally known cleaning method, and the cleaning method is appropriately selected depending on the type of dye constituting the color ink, the type of the textile 3, and the like. For example, when the textile 3 is formed of cellulose fibers, it is common that the textile 3 is washed with water and hot water, then treated with a soaping bath containing a nonionic detergent, and washed with hot water and water. Removal of the undyed dye is likely to result in satisfactory wash fastness, water-fastness, sweat-fastness, and the like.

After the washing step, a drying step of drying the washed textile 3 is performed (step S105). The drying method is not particularly limited, and the textile 3 is dried by squeezing the washed textile 3, drying the washed textile 3, or drying the washed textile 3 using a dryer (a heat roll, an iron, or the like).

Note that a pre-processing process may be provided before the penetrant liquid application process of step S101 in order to prevent the color ink from bleeding on the textile 3 and obtain a clear image. In the pretreatment step, a pretreatment agent containing a water-soluble polymer as a sizing agent is preliminarily applied to the textile 3. Examples of the method for applying the pretreatment agent include a pad method, a coating method, and a spray method.

In addition, a drying process of drying the penetrant liquid and the color ink may be provided between the penetrant liquid application process of step S 101 and the color ink application process of step S102 or between the color ink application process of step S 102 and the color developing process of step S103. Examples of the drying method include an air convection method, a heating roll direct attachment method, and an irradiation method.

[example] Hereinafter, the present invention will be specifically described with reference to examples, but the present invention is not limited thereto. In example, "part(s)" or "%" means "parts by mass" or "% by mass" unless otherwise specified. Furthermore, unless otherwise specified, each operation was performed at room temperature (25°C).

(preparation of penetrant liquid)

Into a preparation vessel, 30.0% of diethylene glycol monobutyl ether, 2.0% of Proxel GXL (1,2-benzisothiazolin-3-on manufactured by Lonza Japan), and 3.0% of Olfine E1010 (an acetylene glycol-based surfactant, manufactured by Nissin Chemical Industry Co., Ltd) were added. Next, ion-exchanged water was further added thereto so that the total became 100%, followed by mixing and sufficient stirring. The obtained liquid was filtered through a 1um filter to obtain a penetrant liquid.

(liquid preparation of color ink)

To a vessel for preparation, 20.0% of ethylene glycol, 10.0% of glycerin, Reactive Black 5 20.0%, E1010 0.05%, and Proxel GXL 0.1% were added. Next, ion-exchanged water was further added thereto so that the total became 100%, followed by mixing and sufficient stirring. The thus-obtained liquid was filtered through a 1um filter to obtain a color ink (black ink).

Such a penetrant liquid and color ink were ejected from an inkjet textile printing apparatus P as illustrated in Fig. 1 to perform printing on a textile 3 that is a cotton broad. More specifically, based on the adhesion amount control method shown in FIGS. 3 to 8, the test chart was printed while changing the amount of color ink applied from 0 $g/m^2$ to 24 $g/m^2$ by 2 $g/m^2$. In the present example, combinations of the set value C, the maximum adhesion amount D of the penetrant liquid, the minimum adhesion amount E of the penetrant liquid, the maximum adhesion amount F of the color ink, and the predetermined value $\gamma$ in each adhesion amount control method are as illustrated in Table I.

[Table 1]

TABLE I

|  | FIG. 3 | FIG. 4 | FIG. 5 | FIG. 6 | FIG. 7 | FIG. 8 |
|---|---|---|---|---|---|---|
| C[$g/m^2$] | 25 | 20 | 20 | 20 | 20 | 20 |
| D[$g/m^2$] | 20 | 15 | 25 | 25 | 15 | 25 |
| E[$g/m^2$] |  |  |  |  | 5 | 5 |
| F[$g/m^2$] | 20 | 25 | 15 | 25 | 20 | 20 |
| $\gamma$ | 1 | 1 | 1 | 1 | 1 | 1 |

Note that in the present example, two heads (inkjet head KM1024iSAE manufactured by Konica Minolta, Inc) are mounted on the first head carriage 1, and the heads are loaded with penetrant liquid. In addition, two heads (piezo type inkjet heads KM1024iSAE manufactured by Konica Minolta, Inc) are mounted on the second head carriage 2, and color inks are mounted on the heads.

After printing the test chart, Samples of examples 1 to 6 corresponding to the coating amount control methods illustrated in Figs. 3 to 8 were prepared by sequentially performing the color development process, the removal process, and the drying process.

Furthermore, samples of the following Comparative Examples 1 to 3 were prepared.

(Comparative Example 1)

The test chart was printed while the adhesion amount of the penetrant liquid was constant at 20 g/m$^2$ and the adhesion amount of the color ink was changed from 0 g/m$^2$ to 24 g/m$^2$ in increments of 2 g/m$^2$.

(Comparative Example 2)

The test chart was printed while the adhesion amount of the penetrant liquid was constant at 5 g/m$^2$ and the adhesion amount of the color ink was changed from 0 g/m$^2$ to 24 g/m$^2$ in increments of 2 g/m$^2$.

(Comparative Example 3)

A test chart was printed while changing the adhesion amounts of the penetrant liquid and the color ink by 2 g/m$^2$ from 0 g/m$^2$ to 24 g/m$^2$.

[Test 1. Permeability evaluation]

Next, the front surface density and the back surface density of each sample and the color of the white portion of the textile 3 were measured with a reflection densitometer (manufactured by X-rite, Inc) to determine α (color difference between the front surface density and the textile 3) and β (color difference between the back surface density and the textile 3) and calculate β/α to evaluate the permeability of each of the examples and the comparative examples. The permeability is evaluated as G (Good) in a case where the value of β/α is 0.6 or more and 1.0 or less and as NG (No Good) in a case where the value of β/α is less than 0.6 or more than 1.0.

[Test 2. Bleeding Evaluation]

In addition, the bleeding suppression effect of each of the examples and the comparative examples was evaluated by visually evaluating the degree of bleeding in the boundary portion between the printing area and the white background portion of the textile 3 of each sample. The bleeding suppression effect is evaluated as G when no bleeding is observed in the boundary portion, and evaluated as NG when bleeding is observed in the boundary portion.

[Test 3. Color Developability Evaluation]

In addition, the color developability of each of examples and comparative examples was evaluated by measuring the reflection lightness L* value of the image surface of the test chart image of each sample on the basis of JIS Z8730-2009 using a colorimeter (X Rite938). Regarding the coloring property, a case where a difference (absolute value) in L* from a standard sample in a case where the penetrant liquid is not applied is less than 5.0 is evaluated as G, and a case where the difference is 5.0 or more is evaluated as NG.
The results of Tests 1-3 are set forth in Table II.

[Table 2]

TABLE II

| | EXAMPLE 1 ( FIG. 3) | EXAMPLE 2 ( FIG. 4) | EXAMPLE 3 ( FIG. 5) | EXAMPLE 4 ( FIG. 6) | EXAMPLE 5 (FIG. 7) | EXAMPLE 6 ( FIG. 8) | COMPARATIVE EXAMPLE 1 | COMPARATIVE EXAMPLE 2 | COMPARATIVE EXAMPLE 3 |
|---|---|---|---|---|---|---|---|---|---|
| PERMEABILITY | G | G | G | G | G | G | G | NG | NG |
| BLEEDING SUPPRESSION | G | G | G | G | G | G | NG | G | NG |
| COLOR DEVELOPABILITY | G | G | G | G | G | G | NG | G | NG |

EP 4 670 987 A1

[Evaluation]

It is clear from Example 1-6 and Comparative Example 1-3 that in a case where the relation of the adhesion amounts of the color ink in the two areas is A1> A2, printing excellent in the permeability of the color ink, bleeding suppression, and color developability becomes possible by controlling the adhesion amount of the penetrant liquid so as to satisfy B1 <B2.

According to the present embodiment, even when the penetrant liquid is used, it is possible to suppress the bleeding of the ink and the decrease in the surface concentration.

Although embodiments of the present invention have been described and shown in detail, the disclosed embodiments are made for purposes of illustration and example only and not limitation. The scope of the present invention should be interpreted by terms of the appended claims.

**Claims**

1. An inkjet textile printing apparatus (P) comprising:

   a plurality of heads that eject a penetrant liquid and a color ink onto a textile; and
   an ejection controller (6) that controls ejection of the penetrant liquid by the head, wherein
   when an adhesion amount of the color ink is represented by A [g/m$^2$] and an adhesion amount of the penetrant liquid is represented by B [g/m$^2$],
   the ejection controller controls ejection of the penetrant liquid by the head to satisfy the following Expression (1) when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2:

$$B1 < B2 \qquad (1).$$

2. The inkjet textile printing apparatus according to claim **1,** wherein the ejection controller controls the ejection of the penetrant liquid by the head so as to satisfy $0.6 \leq \beta/\alpha \leq 1.0$, where $\alpha$ is a color difference between a front surface density of a color ink ejection area and the textile, and $\beta$ is a color difference between a back surface density of the color ink ejection area and the textile.

3. The inkjet textile printing apparatus according to claim 2, wherein the ejection controller sets the adhesion amount B of the penetrant liquid on the basis of the following Expression (2) when a set value is set as C [g/m$^2$], a maximum adhesion amount of the penetrant liquid is set as D [g/m$^2$], and an arbitrary positive integer is set as y:

$$B = \min (D, \max (C\text{-}\gamma A, 0)) \qquad (2).$$

4. The inkjet textile printing apparatus according to claim 2, wherein, when a set value is set as C [g/m$^2$], a maximum adhesion amount of the penetrant liquid is set as D [g/m$^2$], an arbitrary positive integer is set as y, and a minimum adhesion amount of the penetrant liquid is set as E [g/m$^2$], the ejection controller sets the adhesion amount B of the penetrant liquid based on the following Expression (3):

$$B = \min (D, \max (C\text{-}\gamma A, E)) \qquad (3).$$

5. The inkjet textile printing apparatus according to claim 3 or 4, wherein the ejection controller controls the head so as not to eject the penetrant liquid to a color ink non-ejection area.

6. The inkjet textile printing apparatus according to any one of claims 2 to 4, wherein the plurality of heads eject the color ink in a plurality of colors.

7. The inkjet textile printing apparatus according to claim 3 or 4, wherein the ejection controller sets the maximum adhesion amount of the penetrant liquid in accordance with print resolution.

8. The inkjet textile printing apparatus according to claim 7, comprising:

an image forming controller (6) that controls ejection of the color ink by the head to form a predetermined test image on the textile;

a reading section (6) that reads the test image formed on the textile; and

a setting section (6) that sets the print resolution and the set value based on a reading result of the test image by the reading section.

9. The inkjet textile printing apparatus according to claim 1, wherein the penetrant liquid contains a surfactant, and a total content of the surfactant in the penetrant liquid is 2.0% or more.

10. The inkjet textile printing apparatus according to claim 9, wherein the total content of the surfactant in the penetrant liquid is less than 5.0%.

11. The inkjet textile printing apparatus according to claim 10, wherein the surfactant is an acetylene glycol-based surfactant.

12. The inkjet textile printing apparatus according to claim 1, wherein the color ink contains a dye.

13. An inkjet textile printing method performed by an inkjet textile printing apparatus including a plurality of heads that eject a penetrant liquid and a color ink onto a textile, the method comprising

a control step that is, when an adhesion amount of the color ink is represented by A [g/m$^2$] and an adhesion amount of the penetrant liquid is represented by B [g/m$^2$],

controlling the head to eject the penetrant liquid such that the following Expression (1) is satisfied when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2:

$$B1 < B2 \qquad (1).$$

14. A program for a computer of an inkjet textile printing apparatus including a plurality of heads that eject a penetrant liquid and a color ink onto a textile, the program causing the computer to function as

an ejection controller that, when an adhesion amount of the color ink is represented by A [g/m$^2$] and an adhesion amount of the penetrant liquid is represented by B [g/m$^2$],

controls the head to eject the penetrant liquid so as to satisfy the following Expression (1) when an adhesion amount of the color ink and an adhesion amount of the penetrant liquid in a first color ink ejection area are A1 and B1, respectively, and an adhesion amount of the color ink and an adhesion amount of the penetrant liquid in a second color ink ejection area are A2 and B2, respectively, and A1 > A2:

$$B1 < B2 \qquad (1).$$

# FIG. 1

P

1        2

3

CONVEYANCE
DIRECTION

4        5

# FIG. 2

START

PENETRANT LIQUID APPLICATION
PROCESS — S101

COLOR INK APPLICATION
PROCESS — S102

COLOR DEVELOPMENT PROCESS — S103

REMOVAL PROCESS — S104

DRYING PROCESS — S105

END

# FIG. 3

PENETRANT LIQUID ADHESION AMOUNT B

C

D

C−$\gamma$F

F

COLOR INK ADHESION AMOUNT A

# FIG. 4

PENETRANT LIQUID ADHESION AMOUNT B

C

D

F

COLOR INK ADHESION AMOUNT A

# FIG. 5

PENETRANT LIQUID ADHESION AMOUNT B

D

C

C−$\gamma$F

F

COLOR INK ADHESION AMOUNT A

# FIG. 6

PENETRANT LIQUID ADHESION AMOUNT B

D

C

F

COLOR INK ADHESION AMOUNT A

# FIG. 7

PENETRANT LIQUID ADHESION AMOUNT B

COLOR INK ADHESION AMOUNT A

# FIG. 8

PENETRANT LIQUID ADHESION AMOUNT B

COLOR INK ADHESION AMOUNT A

# FIG. 9

PENETRANT LIQUID ADHESION AMOUNT B

COLOR INK ADHESION AMOUNT A

# FIG. 10

PENETRANT LIQUID ADHESION AMOUNT B

COLOR INK ADHESION AMOUNT A

Europäisches
Patentamt
European
Patent Office
Office européen
des brevets

# EUROPEAN SEARCH REPORT

**Application Number**

EP 25 18 4441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 049833 A (RICOH CO LTD) 2 April 2020 (2020-04-02) | 1,9-14 | INV. B41J2/21 |
| A | * the whole document * | 2-8 | B41J3/407 B41J11/00 |
| A | JP 5 620135 B2 (FUJIFILM CORP) 5 November 2014 (2014-11-05) * the whole document * | 1-14 | C09D11/328 D06B11/00 D06P5/30 |

**TECHNICAL FIELDS SEARCHED (IPC)**

B41J
D06Q
C09D
D06B
D06P

The present search report has been drawn up for all claims

| Place of search | Date of completion of the search | Examiner |
|---|---|---|
| The Hague | 10 November 2025 | Dewaele, Karl |

EPO FORM 1503 03.82 (P04C01)

## ANNEX TO THE EUROPEAN SEARCH REPORT
## ON EUROPEAN PATENT APPLICATION NO.

EP 25 18 4441

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | | | Publication date | Patent family member(s) | | Publication date |
|---|---|---|---|---|---|---|
| JP  2020049833 | A | | 02-04-2020 | JP | 7147426 B2 | 05-10-2022 |
| | | | | JP | 2020049833 A | 02-04-2020 |
| | | | | US | 2020101767 A1 | 02-04-2020 |
| JP  5620135 | B2 | | 05-11-2014 | CN | 102822407 A | 12-12-2012 |
| | | | | EP | 2554732 A1 | 06-02-2013 |
| | | | | JP | 5620135 B2 | 05-11-2014 |
| | | | | JP | 2011212852 A | 27-10-2011 |
| | | | | WO | 2011122071 A1 | 06-10-2011 |

EPO FORM P0459

For more details about this annex : see Official Journal of the European Patent Office, No. 12/82

**EP 4 670 987 A1**

**Patent documents cited in the description**

- JP 2022014927 A
- JP 7206699 A